# EUROPEAN PATENT APPLICATION

(11) **EP 4 242 926 A1**
(43) Date of publication of application: **13.09.2023**
(21) Application number: 23160395.2
(22) Date of filing: 07.03.2023
(51) Int. Cl.: G06N 3/045, G06N 3/0495, G06N 3/082, G06F 21/57

(54) **SYSTEMS AND METHODS FOR SECURING ARTIFICIAL INTELLIGENCE SYSTEMS FOR EDGE COMPUTING SYSTEMS**

(30) Priority: 08.03.2022 US 202217689983
(71) Applicant: Accenture Global Solutions Limited, Dublin 4 (IE)
(72) Inventor: CHAN, Matthew, Dover, 07801 (US); HASSANZADEH, Amin, Arlington, 22203 (US)
(74) Representative: Müller-Boré & Partner Patentanwälte PartG mbB

(57) **Abstract**

Aspects of the present disclosure provide systems, methods, and computer-readable storage media that support security-aware compression of machine learning (ML) and/or artificial intelligence (AI) models, such as for use by edge computing systems. Aspects described herein leverage cybersecurity threat models, particularly models of ML/AI-based threats, during iterative pruning to improve security of compressed ML models. To illustrate, iterative pruning may be performed on a pre-trained ML model until stop criteria are satisfied. This iterative pruning may include pruning an input ML model based on pruning heuristic(s) to generate a candidate ML model, testing the candidate ML model based on attack model(s) to generate risk assessment metrics, and updating the heuristic(s) based on the risk assessment metrics. If the risk assessment metrics fail to satisfy the stop criteria, the candidate ML model may be provided as input to a next iteration of the iterative pruning.

## Description

### TECHNICAL FIELD

The present disclosure relates generally to systems and methods that support security-aware compression of machine learning and/or artificial intelligence models. Particular aspects leverage cybersecurity threat models to improve model security in addition to providing compression to generate machine learning and/or artificial intelligence models for use at edge computing systems.

### BACKGROUND

Advances in technology have brought about a wide variety of contexts for computing devices and applications. One type of computing environment is referred to as "the edge" or "edge computing," which typically refers to a distributed computing paradigm in which computation and data storage is moved closer to the sources of the data, as compared to being located at centralized servers within a network. Edge computing may be leveraged to perform processing operations and data storage at endpoint devices themselves, or at edge nodes that host applications or services for multiple endpoint devices and are proximate to, with regards to distance in a network, the endpoint devices. Applications for edge computing include Internet-of-Things (IoT) devices, autonomous or semi-autonomous vehicles, home automation systems (e.g., "smart homes"), mobile or embedded applications and devices, real-time applications, location automation systems (e.g., "smart cities"), cloud gaming, smart peripherals, wireless sensors, industry automation systems, content delivery networks, and the like. In edge computing, transmission of data from endpoint devices outside of local networks (e.g., between endpoint devices and edge nodes, as opposed from edge nodes throughout the network to centralized servers or the cloud) is minimized because at least some operations or applications are hosted at the edge nodes instead of at centralized network locations. As such, benefits of edge computing include increased responsiveness and throughput of applications, bandwidth and efficiency improvements from reduced external network usage, and improved security and privacy due to retaining sensitive data with end-users instead of in the cloud.

Although edge computing provides several benefits, it also has associated challenges. For example, edge devices and applications often have more stringent resource constraints than centralized network devices or cloud devices. As another example, edge devices and applications may have more stringent latency or throughput constraints to support real-time and automated control, in addition to using private or sensitive client data. These challenges have limited the success of supporting some types of applications for edge computing. One such example is machine learning (ML) and artificial intelligence (AI) services. Although moving ML models from centralized network locations or the cloud to edge nodes can achieve benefits of improved response time, improved bandwidth, and maintaining private data on the end-user or client side, resource constraints of the edge nodes may necessitate smaller (e.g., compressed) ML and AI models as compared to those offered at larger servers and in the cloud. ML and AI models may be compressed by pruning, such as reducing the number of nodes and connections in a neural network that do not contribute as much as other nodes and connections. However, pruning or otherwise compressing ML and AI models typically results in models with decreased complexity, which are more vulnerable to cyberattacks, particularly at edge nodes or endpoint devices that may have less resources devoted to cybersecurity than larger servers or cloud service offerings.

### SUMMARY

Aspects of the present disclosure provide systems, methods, apparatus, and computer-readable storage media that support security-aware compression of machine learning (ML) and/or artificial intelligence (AI) models for use by edge computing systems. Systems and methods disclosed herein leverage cybersecurity threat models, particular ML/AI-based threats that are likely to target edge computing systems, as part of an iterative model pruning process that compresses an ML/AI model while also ensuring that one or more risk metrics are satisfied. In this manner, aspects of the present disclosure provide for security-aware model compression, as compared to other model compression techniques that typically reduce model complexity to satisfy size or performance heuristics, but in doing so increase the likelihood that the ML/Al models are open to attacks from malicious actors. As such, aspects of the present disclosure improve security of ML and/or AI systems for computer systems with less processing resources or more stringent constraints, such as edge computing systems (e.g., edge nodes and/or endpoint devices). Such systems may be supported in client-side or distributed configurations (e.g., between client-side and networked or cloud-based systems) based on security and resource considerations. Additionally or alternatively, one or more aspects herein may support executable file packages (e.g., containers) that may be used across multiple platforms, applications, and/or device types without requiring extensive setup by system admins or specially configured systems or software to support the security-aware model compression techniques described herein.

In aspects described herein, a server may be configured to perform security-aware model compression to generate compressed ML/Al models for use by edge computing systems (or other client systems or devices). The server may be a private client server (e.g., an edge server or edge node) or a server in the cloud (e.g., maintained by a cloud service provider (CSP)) that offers cloud-based ML/AI services. The server may receive an executable file package, also referred to as a "container," that includes computer-executable instructions, operating system(s), configuration files, libraries, and the like, that support the operations described herein without requiring that the server execute a particular operating system or be pre-installed with particular files or libraries. As a non-limiting example, the executable file package may include or correspond to a Docker container. The server may obtain an ML model, such as a client's pre-trained ML model or an ML model that is instantiated from a plurality of ML models supported by the server. After optional preprocessing, the server may perform iterative pruning on the ML model. One or more iterations may include pruning, risk assessment determination, heuristic adjustment, and stop criteria comparisons. To illustrate, the server may prune the ML model for a current iteration based on one or more pruning heuristics to generate a candidate ML model. The pruning heuristics may be selected by the client or predefined to provide targeted levels of compression and performance in a final ML model.

After the pruning, the server may test the candidate ML model based on one or more attack models (e.g., models of cybersecurity attacks or threats that may occur to the final ML model) to determine risk assessment metrics. In some implementations, the attack models may include one or more of the following: a model extraction attack model, a membership interference attack model, a model inversion attack model, a data poisoning attack model, an adversarial attack model, or the like. The server may compare the risk assessment metrics and performance metrics to benchmarks associated with the non-pruned ML model and to one or more stopping criteria to determine whether to provide the candidate ML model (or the ML model prior to pruning if the candidate ML model is rejected) as input to another iteration of the iterative pruning or to output the candidate ML model as a compressed ML model. The compressed ML model (e.g., a final ML model) may be used to support ML services to one or more endpoint devices, such as mobile devices, Internet-of-Things (IoT) devices, automated control systems, or the like.

In a particular aspect, a method for security-aware compression of machine learning models includes obtaining, by one or more processors, model parameters that represent a pre-trained machine learning (ML) model. The method also includes performing, by the one or more processors, iterative pruning of the pre-trained ML model until one or more stop criteria are satisfied to generate a compressed ML model. The iterative pruning includes pruning an ML model corresponding to a current iteration based on one or more pruning heuristics to generate a candidate ML model. The iterative pruning also includes testing the candidate ML model based on one or more attack models to generate risk assessment metrics. The iterative pruning also includes updating the one or more pruning heuristics based on the risk assessment metrics. The iterative pruning further includes providing the candidate ML model to a next iteration of the iterative pruning based at least in part on the risk assessment metrics failing to satisfy the one or more stop criteria. The method further includes outputting, by the one or more processors, final model parameters that represent the compressed ML model.

In another particular aspect, a system for security-aware compression of machine learning models includes a memory and one or more processors communicatively coupled to the memory. The one or more processors are configured to obtain model parameters that represent a pre-trained ML model. The one or more processors are also configured to perform iterative pruning of the pre-trained ML model until one or more stop criteria are satisfied to generate a compressed ML model. The iterative pruning causes the one or more processors to prune an ML model corresponding to a current iteration based on one or more pruning heuristics to generate a candidate ML model. The iterative pruning also causes the one or more processors to test the candidate ML model based on one or more attack models to generate risk assessment metrics. The iterative pruning causes the one or more processors to update the one or more pruning heuristics based on the risk assessment metrics. The iterative pruning further causes the one or more processors to provide the candidate ML model to a next iteration of the iterative pruning based at least in part on the risk assessment metrics failing to satisfy the one or more stop criteria. The one or more processors are further configured to output final model parameters that represent the compressed ML model.

In another particular aspect, a non-transitory computer-readable storage medium stores instructions that, when executed by one or more processors, cause the one or more processors to perform operations for security-aware compression of machine learning models. The operations include obtaining model parameters that represent a pre-trained ML model. The operations also include performing iterative pruning of the pre-trained ML model until one or more stop criteria are satisfied to generate a compressed ML model. The iterative pruning includes pruning an ML model corresponding to a current iteration based on one or more pruning heuristics to generate a candidate ML model. The iterative pruning also includes testing the candidate ML model based on one or more attack models to generate risk assessment metrics. The iterative pruning includes updating the one or more pruning heuristics based on the risk assessment metrics. The iterative pruning further includes providing the candidate ML model to a next iteration of the iterative pruning based at least in part on the risk assessment metrics failing to satisfy the one or more stop criteria. The operations further include outputting final model parameters that represent the compressed ML model.

Aspects of the present disclosure provide for compression of machine learning models in a security-aware manner that accounts for cyberattacks or threats to machine learning and artificial intelligence services, as compared to conventional machine learning and artificial intelligence model compression systems and techniques. For example, in addition to pruning a machine learning model based on one or more pruning heuristics (in order to achieve target size, accuracy, or other performance metrics), systems and methods herein test pruned machine learning models (i.e., candidate machine learning models) using one or more cyberattack models, particularly models representing machine learning-specific and artificial intelligence-specific attacks and/or edge computing-specific attacks. Based on results of the testing, the pruning heuristics may be updated and iterative pruning may be controlled such that an output machine learning model not only satisfies one or more performance metrics, but is also robust against (e.g., is secure or prevents/has a decreased likelihood of being exploited by) known cybersecurity threats and attacks, particularly ones designed to exploit machine learning and artificial intelligence services. As such, systems and methods described herein provide machine learning models suitable for use at edge computing devices due to their compressed size and their improved security with respect to cybersecurity attacks and threats, thereby solving a unique problem in the realm of computer technology and machine learning and artificial intelligence systems - security threats of machine learning and artificial intelligence services at edge computing devices. In some implementations, the features described herein may be implemented using an executable file package (e.g., a "container," such as a Docker container as a non-limiting example), which enables a client server or other device to perform the operations in a scalable, platform-agnostic manner and without requiring complex setup or management by information technology personnel. Alternatively, the executable file package may be provided to a cloud service provider, enabling cloud-based machine learning and artificial intelligence service providers to leverage their existing machine learning and artificial intelligence models to be used in security-aware compression for providing machine learning or artificial intelligence services at edge computing devices. Such functionality may be provided by execution of the executable file package at a cloud-based server, without requiring complex setup or management by information technology personnel and in a scalable and platform-agnostic manner.

The foregoing has outlined rather broadly the features and technical advantages of the present disclosure in order that the detailed description that follows may be better understood. Additional features and advantages will be described hereinafter which form the subject of the claims of the disclosure. It should be appreciated by those skilled in the art that the conception and specific aspects disclosed may be readily utilized as a basis for modifying or designing other structures for carrying out the same purposes of the present disclosure. It should also be realized by those skilled in the art that such equivalent constructions do not depart from the scope of the disclosure as set forth in the appended claims. The novel features which are disclosed herein, both as to organization and method of operation, together with further objects and advantages will be better understood from the following description when considered in connection with the accompanying figures. It is to be expressly understood, however, that each of the figures is provided for the purpose of illustration and description only and is not intended as a definition of the limits of the present disclosure.

### BRIEF DESCRIPTION OF THE DRAWINGS

For a more complete understanding of the present disclosure, reference is now made to the following descriptions taken in conjunction with the accompanying drawings, in which:
FIG. 1 is a block diagram of an example of a system that supports security-aware compression of machine learning models according to one or more aspects;
FIG. 2 is a block diagram of an example model compression container (e.g., executable file package) configured to support security-aware machine learning model compression according to one or more aspects;
FIG. 3 is a block diagram of an example of a client-based security-aware machine learning model training system according to one or more aspects;
FIG. 4 is a block diagram of an example of a cloud-based security-aware machine learning model training system according to one or more aspects; and
FIG. 5 is a flow diagram illustrating an example of a method for security-aware compression of machine learning models according to one or more aspects.

It should be understood that the drawings are not necessarily to scale and that the disclosed aspects are sometimes illustrated diagrammatically and in partial views. In certain instances, details which are not necessary for an understanding of the disclosed methods and apparatuses or which render other details difficult to perceive may have been omitted. It should be understood, of course, that this disclosure is not limited to the particular aspects illustrated herein.

### DETAILED DESCRIPTION

Aspects of the present disclosure provide systems, methods, apparatus, and computer-readable storage media that support security-aware compression of machine learning (ML) and/or artificial intelligence (AI) models, such as for use by edge computing systems. As described further herein, cybersecurity threat models, particular ML/AI-based threats that are likely to target edge computing systems, may be leveraged to determine risk assessment metrics during an iterative model pruning process to compress ML/AI models in a security-aware manner that takes into account one or more cyberattack threats to the ML/AI models and/or the edge computing systems. To illustrate, the iterative pruning process may include pruning an ML model based on one or more pruning heuristics, which may be selected based on resource or latency constraints at an edge node, to generate a candidate ML model. One or more threat models may be compared or applied to the candidate ML model to determine one or more performance metrics, which may be used to modify the one or more pruning heuristics and to determine whether to perform additional iterations of the iterative model pruning process (using the candidate ML model as input or rejecting the candidate ML model) or to output the candidate ML model as a compressed ML model (e.g., a final ML model). In this manner, aspects of the present disclosure provide for security-aware ML/AL model compression, as compared to other model compression techniques that typically reduce complexity of ML/Al models to satisfy size or performance heuristics, but in doing so increase the likelihood that the ML/Al models are open to attacks from malicious actors. Additionally, one or more aspects herein may support use of executable file packages (e.g., containers) to perform the operations described herein, which provides a simple, scalable, multi-platform solution for security-aware ML/AI model compression.

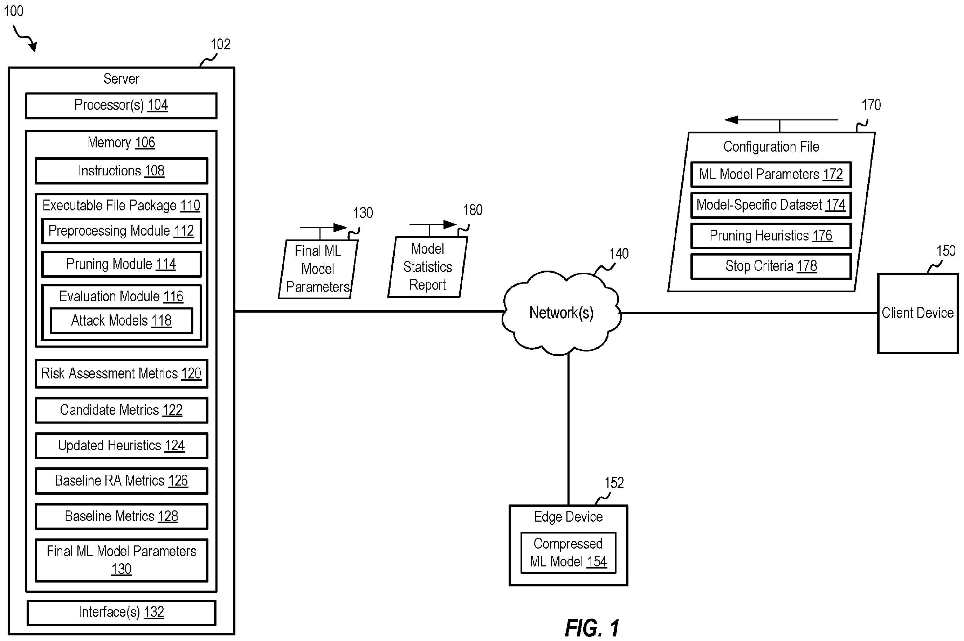

Referring to FIG. 1, an example of a system that supports security-aware compression of machine learning models according to one or more aspects is shown as a system 100. The system 100 may be configured to perform iterative pruning to compress machine learning (ML) and artificial intelligence (AI) models while also satisfying risk criteria related to cybersecurity threats or attacks. As shown in FIG. 1, the system 100 includes a server 102, a client device 150, an edge device 152, and one or more networks 140. In some implementations, one or more of the client device 150 and the edge device 152 may be optional, or the system 100 may include additional components, such as other client devices, other edge devices, endpoint devices, or the like, as non-limiting examples.

Although described as a server, in other implementations, the server 102 may be replaced with a computing device that performs the operations described herein for the server 102. The computing device may include or correspond to a desktop computing device, a laptop computing device, a personal computing device, a tablet computing device, a mobile device (e.g., a smart phone, a tablet, a personal digital assistant (PDA), a wearable device, and the like), a virtual reality (VR) device, an augmented reality (AR) device, an extended reality (XR) device, a vehicle (or a component thereof), an entertainment system, other computing devices, or a combination thereof, as non-limiting examples. The server 102 includes one or more processors 104, a memory 106, and one or more communication interfaces 132. In some other implementations, one or more additional components may be included in the server 102. It is noted that functionalities described with reference to the server 102 are provided for purposes of illustration, rather than by way of limitation and that the exemplary functionalities described herein may be provided via other types of computing resource deployments. For example, in some implementations, computing resources and functionality described in connection with the server 102 may be provided in a distributed system using multiple servers or other computing devices, or in a cloud-based system using computing resources and functionality provided by a cloud-based environment that is accessible over a network, such as the one of the one or more networks 140. To illustrate, one or more operations described herein with reference to the server 102 may be performed by one or more servers or a cloud-based system that communicates with one or more client or user devices that perform other operations described herein with reference to the server 102. In a particular implementation, the server 102 is a client-side server (or other client-side device) and the one or more networks 140 include a private network of a client. In another particular implementation, the server 102 is a cloud server and the one or more networks 140 include one or more public networks, such as the Internet.

The one or more processors 104 may include one or more microcontrollers, application specific integrated circuits (ASICs), field programmable gate arrays (FPGAs), central processing units (CPUs) having one or more processing cores, or other circuitry and logic configured to facilitate the operations of the server 102 in accordance with aspects of the present disclosure. The memory 106 may include random access memory (RAM) devices, read only memory (ROM) devices, erasable programmable ROM (EPROM), electrically erasable programmable ROM (EEPROM), one or more hard disk drives (HDDs), one or more solid state drives (SSDs), flash memory devices, network accessible storage (NAS) devices, or other memory devices configured to store data in a persistent or non-persistent state. Software configured to facilitate operations and functionality of the server 102 may be stored in the memory 106 as instructions 108 that, when executed by the one or more processors 104, cause the one or more processors 104 to perform the operations described herein with respect to the server 102, as described in more detail below. Additionally, the memory 106 may be configured to store data and information, such as one or more risk assessment metrics (referred to herein as "risk assessment metrics 120"), one or more candidate ML model metrics (referred to herein as "candidate metrics 122"), one or more updated pruning heuristics (referred to herein as "updated heuristics 124"), one or more baseline risk assessment metrics (referred to herein as "baseline risk assessment metrics 126"), one or more baseline ML model metrics (referred to herein as "baseline metrics 128"), and one or more final ML model parameters (referred to herein as "final ML model parameters 130"). Illustrative aspects of the risk assessment metrics 120, the candidate metrics 122, the updated heuristics 124, the baseline risk assessment metrics 126, the baseline metrics 128, and the final ML model parameters 130 are described in more detail below.

The memory 106 may be further configured to store an executable file package 110, also referred to herein as a container. As an example, the executable file package 110 may include or correspond to a Docker container. The executable file package 110 may include various types of executable files, non-executable files, artifacts, scripts, libraries, and other data, and when installed on the server 102, enable the server 102 to compress ML models in a security-aware manner without requiring that the server 102 support, or that the server 102 be operated by users with sufficient knowledge to perform complex ML training, compression, and benchmarking operations. To illustrate, the executable file package 110 may include operating systems (e.g., Linux-based or others), scripting libraries (e.g., Python or the like), ML libraries, attack model libraries, configuration files, and executable files or applications for performing preprocessing of ML models, pruning of ML models, and evaluation of ML models against cybersecurity threats or attacks. In some implementations, the executable file package 110 includes a preprocessing module 112, a pruning module 114, and an evaluation module 116. Each of the modules 112-116 may include or correspond to instructions, configurations, libraries, and the like that, when executed by the one or more processors 104, cause performance of the operations described herein. The evaluation module 116 may include or access one or more attack models (referred to herein as "attack models 118"), which may be based on cybersecurity threats or attacks that may occur at the edge device 152 and/or that target machine learning or artificial intelligence services and models. Illustrative aspects of the preprocessing module 112, the pruning module 114, and the evaluation module 116 are described in more detail below. In some other implementations, the server 102 may include one or more of the preprocessing module 112, the pruning module 114, or the evaluation module 116. In such implementations, the modules 112-116 may correspond to particularly configured hardware, instructions (e.g., one or more of the instructions 108), firmware, or a combination thereof, such that the server 102 is configured to perform the operations described further herein.

The one or more communication interfaces 132 may be configured to communicatively couple the server 102 to the one or more networks 140 via wired or wireless communication links established according to one or more communication protocols or standards (e.g., an Ethernet protocol, a transmission control protocol/internet protocol (TCP/IP), an Institute of Electrical and Electronics Engineers (IEEE) 802.11 protocol, an IEEE 802.16 protocol, a 3rd Generation (3G) communication standard, a 4th Generation (4G)/long term evolution (LTE) communication standard, a 5th Generation (5G) communication standard, and the like). In some implementations, the server 102 includes one or more input/output (I/O) devices that include one or more display devices, a keyboard, a stylus, one or more touchscreens, a mouse, a trackpad, a microphone, a camera, one or more speakers, haptic feedback devices, or other types of devices that enable a user to receive information from or provide information to the server 102. In some implementations, the server 102 is coupled to a display device, such as a monitor, a display (e.g., a liquid crystal display (LCD) or the like), a touch screen, a projector, a virtual reality (VR) display, an augmented reality (AR) display, an extended reality (XR) display, or the like. In some other implementations, the display device is included in or integrated in the server 102.

The client device 150 is configured to communicate with the server 102 via the one or more networks 140 to provide input for use by the server 102 to perform security-aware ML model compression. The client device 150 may include or correspond to a computing device, such as a desktop computing device, a server, a laptop computing device, a personal computing device, a tablet computing device, a mobile device (e.g., a smart phone, a tablet, a PDA, a wearable device, and the like), a VR device, an AR device, an XR device, a vehicle (or component(s) thereof), an entertainment system, another computing device, or a combination thereof, as non-limiting examples. The client device 150 may include a processor, one or more communication interfaces, and a memory that stores instructions that, when executed by the processor, cause the processor to perform the operations described herein, similar to the server 102. The client device 150 may also store a pre-trained ML model and/or client-specific data, which may be private or confidential to the client, and which may be used to train the pre-trained ML model or may be provided to the server 102 for training of an ML model. Although described as separate devices, in some other implementations, the operations described herein with reference to the server 102 and the client device 150 may be performed by a single device (e.g., a server or other client device).

The edge device 152 is configured to communicate with the server 102 via the one or more networks 140 to receive parameters of a compressed ML model for implementing one or more ML services at the edge device 152. The edge device 152 may include or correspond to an edge node or another type of computing device, such as a desktop computing device, a laptop computing device, a personal computing device, a tablet computing device, a mobile device (e.g., a smart phone, a tablet, a PDA, a wearable device, and the like), a VR device, an AR device, an XR device, a vehicle (or component(s) thereof), an entertainment system, another computing device, or a combination thereof, as non-limiting examples. The edge device 152 may include a processor, one or more communication interfaces, and a memory that stores instructions that, when executed by the processor, cause the processor to perform the operations described herein, similar to the server 102. The edge device 152 may be communicatively coupled to one or more endpoint devices (e.g., mobile devices, IoT devices, automated or semi-automated control systems, and the like), which are not shown for convenience, in order to support ML services and/or other services at the endpoint devices. The server 102 may have more computing resources than the edge device 152. In some examples, the server 102 may have at least one of the following: more processing power than the edge device 152, more memory than the edge device, more bandwidth than the edge device 152. For example, the server 102 may have more processors or processing cores than the edge device 152 and/or more memory channels than the edge device 152. In the preceding examples comparing the server 102 and the edge device 152, the server 102 may have at least 1.5 times more, 2 times more, 3 times more, 5 times more or 10 times more computing resources than the edge device 152.

During operation of the system 100, the client device 150 may provide a configuration file 170 to the server 102. In some implementations, the client device 150 may initiate an ML compression process at the server 102, and the configuration file 170 may be sent to the server 102 as part of the initiation or after initiation of the ML compression process. In some other implementations, the server 102 may initiate the ML compression process, and the client device 150 may send the configuration file 170 to the server 102 in response to one or more requests received from the server 102, such as requests for a pre-trained ML model, training data, other parameters, or the like. Although described as a single file (i.e., the configuration file 170), in some other implementations, information illustrated in FIG. 1 as being included in the configuration file 170 may be communicated to the server 102 in more than one distinct file or messages from the client device 150.

The configuration file 170 may include ML model parameters 172 (or an indicator of a location thereof), a model-specific dataset 174 (or an indicator of a location thereof), one or more pruning heuristics (referred to herein as "pruning heuristics 176"), and one or more stop criteria (referred to herein as "stop criteria 178"), other configurations or parameters (e.g., attack parameters), or a combination thereof. The ML model parameters 172 may include or correspond to one or more parameters and/or hyperparameters associated with a pre-trained ML model. For example, the ML model parameters 172 may include node parameters, weights, layer parameters, training or retraining hyperparameters, such as numbers of epochs of training, other parameters or hyperparameters, or a combination thereof. In some implementations, the pre-trained ML model may include or correspond to one or more neural networks (NNs), such as multi-layer perceptron (MLP) networks, convolutional neural networks (CNNs), recurrent neural networks (RNNs), deep neural networks (DNNs), long short-term memory (LSTM) NNs, or the like. In other implementations, the pre-trained ML model may be implemented as one or more other types of ML models, such as support vector machines (SVMs), decision trees, random forests, regression models, Bayesian networks (BNs), dynamic Bayesian networks (DBNs), naive Bayes (NB) models, Gaussian processes, hidden Markov models (HMMs), regression models, or the like. The pre-trained ML model may be configured to perform any type of ML task, such as classification, prediction, generating variations of inputs, or the like. As non-limiting examples, the pre-trained ML model represented by the ML model parameters 172 may be trained to classify input information indicating user communications as fraudulent or non-fraudulent, or to classify input sensor data as one of multiple system states. In some implementations, the configuration file 170 includes the ML model parameters 172 within the configuration file 170. Alternatively, the configuration file 170 may indicate a location of the ML model parameters 172, such as at another device, a database, a repository, or the like, that is accessible to the server 102.

The model-specific dataset 174 includes training data, testing data, validation data, or a combination thereof, for use with the pre-trained ML model. The model-specific dataset 174 may include private or confidential data of a client or customers of the client. As non-limiting examples, the model-specific dataset 174 may include purchase data, customer profile data, sensor data, control system data, image data, or the like. The model-specific dataset 174 may have been used to train and/or test the pre-trained model represented by the ML model parameters 172. In some implementations, the configuration file 170 includes the model-specific dataset 174 within the configuration file 170. Alternatively, the configuration file 170 may indicate a location of the model-specific dataset 174, such as at a database or another storage location, and the server 102 may obtain the model-specific dataset 174 based on the indication.

In some other implementations, the client does not provide a pre-trained ML model and instead the client selects one of multiple ML models or services supported by the server 102, such as ML models in a repository maintained by the server 102. In such implementations, the configuration file 170 may include an indication of a selection of one of the ML models supported by the server 102, and the server 102 may obtain the ML model parameters 172 by accessing the ML model parameters 172 from a model repository (or other storage) based on a model selection input (e.g., included in the configuration file 170). In implementations in which a pre-trained ML model is selected from those provided by the server 102, the client may either provide training data (e.g., the model-specific dataset 174) or may select training data from one or more sets of training data supported by or accessible to the server 102.

The pruning heuristics 176 include one or more heuristics to at least partially control iterative pruning (e.g., compression) of the pre-trained ML model. For example, the pruning heuristics 176 may be based on weights of the ML model, activations of neurons (in neural networks), model compression, model accuracy, or the like. As a particular example, the pruning heuristics 176 may include or be based on average percentage of zero activations (APoZ). The stop criteria 178 include thresholds and/or other criteria used to determine whether to stop (e.g., terminate) the iterative pruning. For example, the stop criteria 178 may include one or more thresholds that correspond to, or may otherwise be based on, model compression ratios, model size, model accuracy, pruning duration (e.g., durations of time and/or numbers of iterations), or the like. As particular, non-limiting examples, the stop criteria 178 may include one or more success rates corresponding to the one or more attack models, a compression ratio, a pruning duration threshold, an accuracy threshold, or a combination thereof.

After the server 102 receives the configuration file 170 (and/or obtains the above-described information), execution of the preprocessing module 112 may cause performance of one or more preprocessing operations based at least in part on the ML model parameters 172, the model-specific dataset 174, or both. The preprocessing operations may be performed to format, compress, extrapolate, or otherwise preprocess the pre-trained ML model represented by the ML model parameters 172 and/or model-specific dataset 174 for use as input to iterative pruning described further below. For example, the preprocessing operations may include formatting weights of the ML model parameters 172, modifying a number of layers represented by the ML model parameters 172, formatting the model-specific dataset 174, discarding redundant values or null values from the model-specific dataset 174, or the like. As another example, the preprocessing operations may include augmenting the model-specific dataset 174 based on the attack models 118. To illustrate, some types of cybersecurity attacks or threat models may benefit from inspection and modification of training data, such as changing some training inputs to provide sufficient coverage of different attack, or non-attack, situations. Additionally or alternatively, the preprocessing operations may include benchmarking the pre-trained ML model. For example, execution of the preprocessing module 112 (or the evaluation module 116 in combination with the preprocessing module 112) may cause the server 102 to test the pre-trained ML model represented by the ML model parameters 172 using the attack models 118, as further described below, to determine the baseline risk assessment metrics 126, to test the pre-trained ML model using testing data from the model-specific dataset 174 to determine the baseline metrics 128, or both. To further illustrate, the baseline risk assessment metrics 126 may measure the risks associated with the attack models 118 with respect to the pre-trained ML model, such as attack success rates, attack severity, and the like, and the baseline metrics 128 may measure performance of the pre-trained ML model prior to pruning, and may include metrics such as model accuracy, model size, false positive counts, false negative counts, complexity measurements, and the like. Preprocessing may be optional, and as such, in some implementations the executable file package 110 does not include the preprocessing module 112.

After receiving the configuration file 170, and optionally performing preprocessing, execution of the pruning module 114 and the evaluation module 116 may cause the server 102 to perform an iterative pruning process on the pre-trained ML model to perform one or more iterations of pruning and testing in a security-aware manner. The iterative pruning process may be performed for one or more iterations, and each iteration may include performance of one or more pruning operations, one or more testing operations, one or more feedback and updating operations, and one or more comparison operations. An illustrative iteration of the iterative pruning process is described below. Particular iterations (e.g., a first iteration, a second iteration, a third iteration, etc.) may be performed in a similar manner, with the ML model parameters 172 (representing the pre-trained ML model) and the model-specific dataset 174 (after optional preprocessing) being provided as inputs to the first iteration, and one or more outputs of a previous iteration being provided as input(s) to later iterations.

Execution of the pruning module 114 may cause the server 102 to prune an input ML model based on the pruning heuristics 176 to generate a candidate ML model (e.g., represented by candidate ML model parameters). To illustrate, the input ML model may include a neural network, and pruning the input ML model may include discarding (e.g., nullifying or setting to a null value) one or more weights associated with the neural network to prune one or more connected nodes from the neural network, thereby forming the candidate ML model. Because the candidate neural network includes fewer non-null weights and/or fewer nodes that the input ML model, the candidate ML model is a compressed model with respect to the input ML model and has a smaller size (e.g., the candidate ML model parameters occupy a smaller memory footprint that the input ML model parameters). Additionally or alternatively, the candidate ML model may be less complex to implement than the input ML model, thus reducing processing resource requirements for implementation at an end device. During each iteration of the process, the pruning may include nullifying one weight or multiple weights (e.g., removing a single node or multiple nodes) based on the pruning heuristics 176. For example, the pruning may be performed to prune a preset number of weights or nodes that fail to satisfy the pruning heuristics 176, or pruning all weights or nodes that fail to satisfy the pruning heuristics 176. To illustrate, if the pruning heuristic 176 includes APoZ, one or more weights that connect to nodes that average zero activations during testing, or one or more nodes associated with the lowest average activations during testing, may be pruned during the first iteration. In some implementations, values and configurations of the pruned (e.g., discarded) weights and/or nodes may be stored or otherwise maintained such that the pruned nodes may be added back during a later iteration if the candidate ML model is rejected or to improve responsiveness of the candidate ML model to cybersecurity attacks associated with the attack models 118. Although described in the context of neural networks, the pruning may include any operation that corresponds to reducing the complexity and size of the input ML model (e.g., setting an activation function to a null value, etc., nullifying weights or nodes in a decision tree, nullifying vector values or weights, etc.).

After pruning the input ML model to create the candidate ML model, execution of the evaluation module 116 may cause the server 102 to test the candidate ML model against cybersecurity attacks and/or cybersecurity threats to determine the relative security risks of the candidate ML model. To illustrate, the server 102 may test the candidate ML model based on the attack models 118 to determine the risk assessment metrics 120. The attack models 118 are configured to model one or more cybersecurity attacks (e.g., cyberattacks) or cybersecurity threats, particularly cybersecurity attacks or models that are likely to target edge computing devices and/or ML and/or AI services. Such attacks may include attacks that target model privacy, data privacy, or both. For example, the attack models 118 may include a model extraction attack model, a membership interference attack model, a model inversion attack model, a data poisoning attack model, an adversarial attack model, other types of attack or threat models, or a combination thereof. Adversarial or adaptive attacks, also referred to as evasion attacks, exploit the complexity of an ML model for malicious behavior, such as by identifying similar input data that, when processed by the ML model, results in different outputs due to complexity of decision boundaries learned by the ML model. Removing excess complexity and smoothing decision boundaries learned by an ML model can prevent or reduce the effectiveness and ease of these types of attacks. Data poisoning attacks alter the distribution of data to create malicious behavior for specific inputs, such as by overloading training data with particular input in order to train an ML model to generate a predictable output that may be exploited by a malicious entity (e.g., hackers, virus or malware distributors, corporate espionage, disgruntled employees, etc.). Removing information necessary for triggering the malicious behavior from the ML model may protect against data poisoning attacks. Model extraction attacks attempt to determine (e.g., reverse engineer) the configuration of an ML model by analyzing input data and corresponding output data from the ML model. Such attacks may include membership inference attacks and model inversion attacks. Membership inference attacks leverage an inferable relationship between particular input data and output data to learn relationships between related input data or related output data with the goal of "cracking" (i.e., reverse engineering) the ML model. Model inversion attacks provide data and inverted data as input data and attempt to reverse-engineer the ML model based on the corresponding output data.

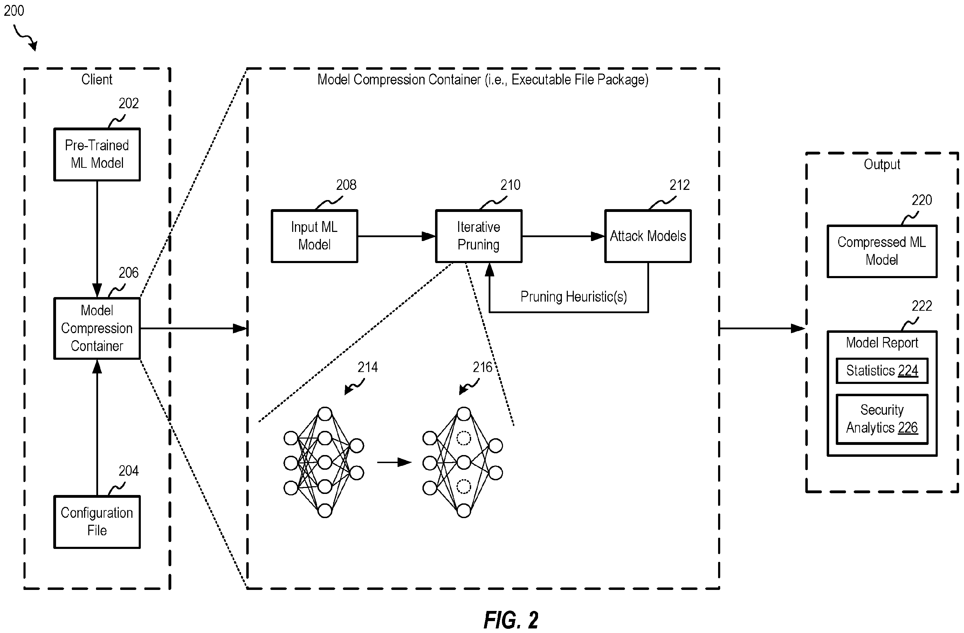

In some implementations, the attack models 118 may be generated, tuned, or selected (e.g., from a plurality of supported attack models, such as an attack suite, as further described herein with reference to FIGS. 2-4) based on attack model parameters included in the configuration file 170 or accessible to the server 102. The attack parameters may include identifiers of one or more types of cybersecurity attacks or cybersecurity risks, input data associated with the attacks, timing and/or duration of the attacks, other parameters, or a combination thereof. The attack parameters may be selected by the client either partially or entirely, or may be partially or entirely selected automatically by the server 102 (e.g., based on one or more preset configurations). Testing the candidate ML model based on the attack models 118 generates the risk assessment metrics 120 that represent the risks, results, and the like, associated with application of the attack models 118. The risk assessment metrics 120 may indicate success rates of attacks, ML model robustness, ML model vulnerabilities, time periods until an attack is successful, other risk assessment metrics, averages thereof, or a combination thereof. In addition to testing the candidate ML model based on the attack models 118, execution of the evaluation module 116 may also cause the server 102 to analyze other performance of the candidate ML model to determine the candidate metrics 122 for the candidate ML model. For example, the candidate metrics 122 may include model accuracy, model complexity, size (e.g., memory footprint), latency, other metrics, or the like.

After determining the risk assessment metrics 120 (and the candidate metrics 122), the server 102 may update the pruning heuristics 176 based on the risk assessment metrics 120 to generate the updated heuristics 124 (i.e., during a first iteration) or the server 102 may update the updated heuristics 124 based on the risk assessment metrics 120 (i.e., during other iterations). In some implementations, the server 102 may update the pruning heuristics 176 or the updated heuristics 124 based on a comparison of the risk assessment metrics 120 to the baseline risk assessment metrics 126 or a comparison of the risk assessment metrics 120 to other thresholds or baselines. For example, if one or more of the risk assessment metrics 120 fails to satisfy one or more of the baseline risk assessment metrics 126 or one or more thresholds (e.g., one or more of the stop criteria 178, one or more attack parameters, etc.), or if a difference between the risk assessment metrics 120 and the baseline risk assessment metrics 126 fails to satisfy one or more thresholds, the server 102 may modify one or more heuristics. Modifying the heuristics may include reducing one or more heuristic values, such as heuristics based on weights, activations of neurons (in neural networks), model compression, model accuracy, or the like. As a particular, non-limiting example, the pruning may include pruning a particular number of nodes that have a lowest APoZ, and modifying the updated heuristics 124 may include reducing the number of nodes that are pruned based on lowest APoZ. Additionally or alternatively, modifying the updated heuristics 124 may include differentially analyzing the uniquely identifying parts of an ML model to identify nodes to prune to prevent certain types of attacks, such as membership inference attacks, and modifying the updated heuristics 124 to cause (or increase the probability of) pruning the identified nodes. The updated heuristics 124 may be used throughout the rest of the iterative pruning process (and optionally for processes performed on similar types of ML models, ML models from the same client, etc.). For example, the pruning heuristics 176 may be used during a first iteration of the pruning process, and the updated heuristics 124 may be used during subsequent iterations, as the heuristics are further refined and updated. In some such implementations, the updated heuristics 124 may be stored and used for iterative pruning of the same type of ML model to provide more efficient security-aware pruning.

After updating the updated heuristics 124, the server 102 may determine whether to continue the iterative pruning process based at least in part on the risk assessment metrics 120 failing to satisfy the stop criteria 178. For example, the server 102 may compare the risk assessment metrics 120, or a difference between the risk assessment metrics 120 and the baseline risk assessment metrics 126, to the stop criteria 178 and if the risk assessment metrics 120 fail to satisfy one or more of the stop criteria 178, the server 102 may determine to perform at least one more iteration of the pruning process. To illustrate, if the risk assessment metrics 120 fail to satisfy one or more risk thresholds, this may indicate that the candidate ML model does not provide sufficient security against one or more attacks that correspond to the attack models 118. Performing another iteration, based on the updated heuristics 124, may further improve the response of a next candidate ML model to the attack models 118. Additionally or alternatively, the server 102 may compare other metrics, measurements, or values to the stop criteria 178 to determine whether to continue the iterative pruning process. For example, the server 102 may compare one or more of the candidate metrics 122, or a difference between the candidate metrics 122 and the baseline metrics 128, to the stop criteria 178 and if the candidate metrics 122 do not satisfy one or more of the stop criteria 178, the server 102 may determine to perform at least one more iteration of the pruning process. For example, if the candidate metrics 122 include an accuracy percentage or a compression ratio, and the stop criteria 178 include an accuracy threshold or a compression threshold, the server 102 may determine to perform a subsequent iteration of the pruning process if the accuracy percentage fails to satisfy the accuracy threshold and/or the compression ratio fails to satisfy the compression threshold. As another example, the server 102 may monitor the iterative pruning process and maintain (or the candidate metrics 122 may include) measurements such as a duration of the pruning process, a number of iterations performed, an amount of change between iterations, other measurements, or the like, and the server 102 may determine to perform a subsequent iteration if one or more of the measurements fail to satisfy one or more corresponding criteria included in the stop criteria 178.

If the server 102 determines to continue the iterative pruning process by performing a next iteration, the candidate ML model created during the current iteration may be provided as input to next iteration. For example, if performance of a first iteration results in creation of a first candidate ML model based on the pre-trained model represented by the ML model parameters 172, the first candidate ML model may be provided as an input ML model to a second iteration of the pruning process. In some such implementations, providing the candidate ML model as input to a next iteration is conditional upon the candidate ML model satisfying one or more criteria, otherwise the candidate ML model may be rejected and the next iteration may receive the input ML model from the previous iteration as input. Because the next iteration may use different pruning heuristics (i.e., the updated heuristics 124), performing multiple iterations using the same input candidate ML model may generate different candidate ML models. To illustrate determining whether to provide the candidate ML model as input to a next iteration or to reject the candidate ML model, the server 102 may compare metrics or measurements (e.g., the risk assessment metrics 120, the candidate metrics 122, other metrics described above, comparisons of the metrics and baseline metrics, etc.) to generate model performance results that are compared to one or more rejection thresholds (e.g., the stop criteria 178 or other thresholds). If the performance results fail to satisfy the rejection thresholds, the server 102 may reject the candidate ML model created during the current iteration and may reuse the input ML model from the current iteration (or from a previous iteration) as input to the next iteration. If the performance results satisfy the rejection thresholds, the server 102 may provide the candidate ML model as input to the next iteration.

If the server 102 determines to not continue the iterative pruning process (e.g., based on one or more of the stop criteria 178 being satisfied after the testing operations), the server 102 may provide the candidate ML model as output of the iterative pruning process. To illustrate, the server 102 may output parameters associated with the candidate ML model as the final ML model parameters 130. The final ML model parameters 130 may include node parameters, layer parameters, weights, hyper-parameters, other parameters, or a combination thereof, that represent the configuration of the candidate ML model created during the final iteration of the iterative pruning process. Outputting the final ML model parameters 130 may include the server 102 storing the final ML model parameters 130 at the memory 106 (or another location, such as a database or repository). Additionally or alternatively, outputting the final ML model parameters 130 may include the server 102 providing the final ML model parameters 130 to an edge device configured to implement compressed ML model(s). For example, the server 102 may send the final ML model parameters 130 to the edge device 152 (e.g., via the one or more networks 140). The edge device 152 may implement a compressed ML model 154 using the final ML model parameters 130. Because the compressed ML model 154 is the result of security-aware compression, the compressed ML model 154 is more robust against attacks that target ML and AI services than other compressed ML models.

In some implementations, performing the iterative pruning process includes generating and maintaining a model statistics report 180. For example, during a first iteration of the iterative pruning process, the server 102 may generate the model statistics report 180, and during one or more subsequent iterations, the server 102 may update the model statistics report 180 based on operations performed and values determined during the subsequent iterations. To further illustrate, the server 102 may update (or generate) the model statistics report 180 based on the risk assessment metrics 120, the candidate metrics 122, the baseline risk assessment metrics 126, the baseline metrics 128, other performance metrics (e.g., comparisons of the risk assessment metrics 120 to the baseline risk assessment metrics 126 and/or the candidate metrics 122 to the baseline metrics 128) corresponding to the candidate ML model, the updated heuristics 124, the attack parameters and/or the attack models 118, other measurements or metrics associated with the iterative pruning process, or any combination thereof. The information provided by the model statistics report 180 may be used to analyze the expected security of the compressed ML model 154, relationships between that attack models 118 and the compression performed during the iterative pruning process, relationships between metrics associated with the compressed ML model 154 and the attack models 118, other useful analytics, or a combination thereof. The server 102 may provide the model statistics report 180 to the client device 150 for review by a user or for use in performing one or more analytics operations or use by one or more applications, and/or the server 102 may store the model statistics report 180 at another location (e.g., a database of ML model statistics or reports) for later review and use.

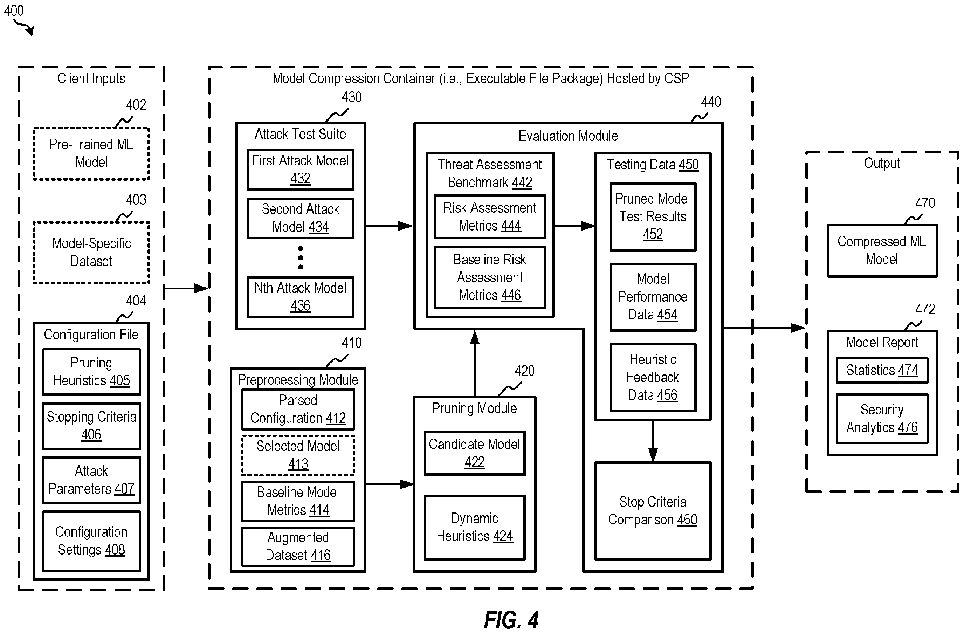

As described above, the system 100 supports compression of ML models in a security-aware manner that accounts for cyberattacks or threats to ML and AI services, as compared to conventional ML model compression systems and techniques. For example, in addition to pruning the pre-trained ML model represented by the ML model parameters 172 based on the pruning heuristics 176 (in order to achieve target size, accuracy, or other performance metrics), the server 102 may test pruned ML models (i.e., candidate ML models) using the attack model 118, which represent ML and AI-specific cyberattacks and/or edge computing-specific cyberattacks. Based on results of the testing, the server 102 continuously updates the updated heuristics 124 and controls the iterative pruning process such that an output ML model represented by the final ML model parameters 130 not only satisfies one or more performance metrics, but is also robust against (e.g., is secure or prevents/has a decreased likelihood of being exploited by) known cybersecurity threats and attacks, particularly ones designed to exploit ML and AI services. As such, the system 100 provides ML models suitable for use at edge computing devices, such as the edge device 152, due to the ML model's compressed size and improved security with respect to cybersecurity attacks and threats, thereby solving a unique problem in the realm of computer technology and ML and AI systems - security threats of ML and AI services at edge computing devices. In some implementations, the operations described with reference to FIG. 1 may be implemented using the executable file package 110 (e.g., a "container," such as a Docker container as a non-limiting example), which enables the server 102 (or other client devices/systems) to perform the operations in a scalable, platform-agnostic manner and without requiring complex setup or management by information technology personnel at the client-side. Alternatively, the executable file package 110 may be provided to a cloud service provider, enabling cloud-based ML and AI service providers to leverage their existing ML and AI models to be used in security-aware compression for providing ML or AI services at edge computing devices, as further described herein with reference to FIG. 4. Such functionality may be provided by execution of the executable file package 110 at a cloud-based server, without requiring complex setup or management by information technology personnel and in a scalable and platform-agnostic manner.

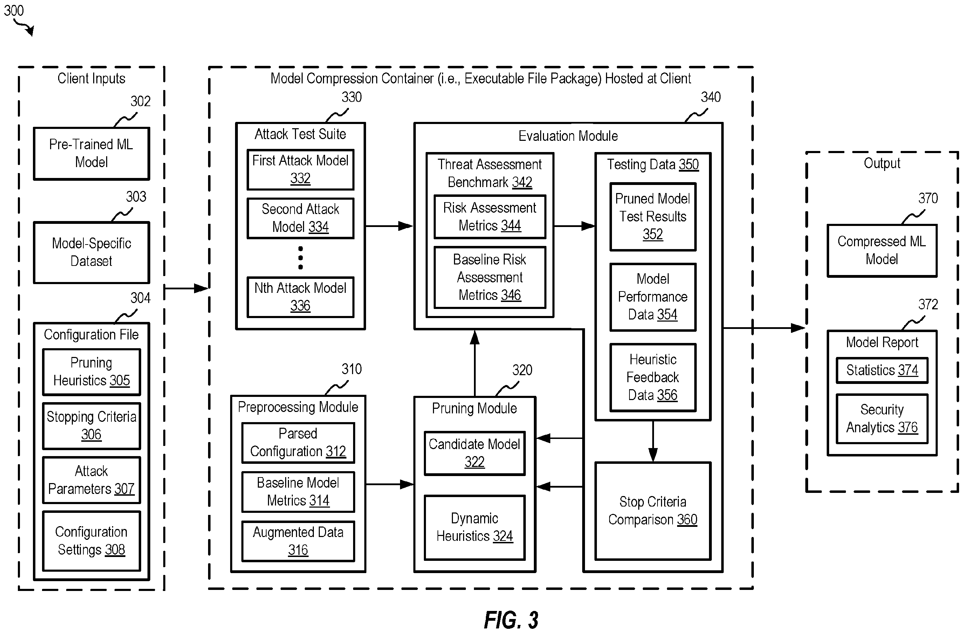

Referring to FIG. 2, an example of a model compression container (e.g., an executable file package) configured to support security-aware machine learning model compression according to one or more aspects is shown with reference to a system 200. The system 200 includes one or more elements that may be provided as input to an iterative pruning process (e.g., an iterative ML model compression process) initiated and controlled by execution of a container (e.g., an executable file package), such as a Docker container, at one or more client-side devices, as well as outputs of the iterative pruning process. As such, the iterative pruning process associated with the system 200 of FIG. 2 may be performed by a server or other computing device of a client, such as the iterative pruning process performed by the system 100 (e.g., the server 102) described above with reference to FIG. 1. Additional details of implementing the iterative pruning process in client-side systems through use of executable file packages are described further herein with reference to FIG. 3.

As shown in FIG. 2, the client may provide a pre-trained ML model 202 and a configuration file 204 as inputs to a model compression container 206. The pre-trained ML model 202 may include any type of ML model, such as a neural network, an SVM, a decision tree, or the like, that is configured to perform one or more ML tasks. In some implementations, the pre-trained ML model 202 may include or correspond to the pre-trained ML model represented by the ML model parameters 172 of FIG. 1. The pre-trained ML model 202 may be created and trained by the client, or received from a third-party ML service provider contracted by the client to provide ML models. The configuration file 204 may include one or more parameters for performing the iterative pruning process, such as training data and/or testing data for the pre-trained ML model 202 (or locations of such data), one or more pruning heuristics, one or more stopping criteria, one or more attack parameters, other information, or a combination thereof. In some implementations, the configuration file 204 may include or correspond to the configuration file 170 of FIG. 1. The pruning heuristics of the configuration file 204 may be based on a baseline compression and focus on preserving accuracy, such as a heuristic like APoZ that is used to look at an ML model during execution and remove neurons that rarely activate. Such heuristics can be used to form compressed ML models with small accuracy losses (e.g., approximately 3% in one example) and significant size reductions (e.g., approximately 55% in one example). Although shown as distinct from the pre-trained ML model 202, in some other implementations, the configuration file 204 may include the pre-trained ML model 202 or a location thereof, similar to the configuration file 170 of FIG. 1. In a particular implementation, the configuration file 204 includes one or more pruning heuristics, one or more threat models to analyze, one or more break conditions/stopping criteria (e.g., compression ratio(s), pruning duration (e.g., in time or number of iterations), and accuracy threshold(s)), locations of the pre-trained ML model 202 and model-specific data (e.g., training data, testing data, validation data, etc.), and other hyperparameters (e.g., number of training epochs/iterations, number of retraining epochs/iterations, etc.).

The model compression container 206 is a container (e.g., an executable file package) that includes operating systems (e.g., Linux-based or others), scripting libraries (e.g., Python or the like), ML libraries, attack model libraries, configuration files, and executable files or applications for performing preprocessing of ML models, pruning of ML models, and evaluation of ML models against cybersecurity threats or attacks. For example, the model compression container 206 may include or correspond to the executable file package 110 of FIG. 1. In some implementations, the model compression container 206 includes or corresponds to a Docker container.

In the example of FIG. 2, the model compression container 206 is configured to receive an input ML model 208 (e.g., the pre-trained ML model 202 for a first iteration) and to perform iterative pruning 210 on the input ML model 208 based on the pruning heuristics to generate candidate ML models that are tested based on attack models 212. Based on the results of the tests, the pruning heuristics are updated and the iterative pruning continues until one or more of the stopping criteria are satisfied. An illustrative illustration of pruning is depicted in FIG. 2. In this illustrative example, an input ML model 214 for a particular iteration of the iterative pruning process is pruned based on the pruning heuristics to form a candidate ML model 216. As shown, the pruning may include identifying one or more nodes of the input ML model 214 to remove (e.g., discard) in order to form the candidate ML model 216. The pruning may be accomplished by erasing or otherwise nullifying the weights associated with the connections between the pruned nodes and other nodes in the input ML model 214. For example, the candidate ML model 216 may be formed by the weights of three input connections and two output connections for each of two nodes in a middle layer that fail to satisfy a particular heuristic, such as an APoZ threshold as a non-limiting example. Similar pruning may be performed for each iteration of the iterative pruning process.

Unlike conventional pruning, which is focused exclusively on model size and accuracy considerations, the iterative pruning process performed by the model compression container 206 also performs compression from the perspective of security, particularly that of different practical threat models (e.g., the attack models 212). To illustrate, the candidate ML models are tested based on the attack models 212, and based on results (e.g., risk assessment metrics) of the tests, the pruning heuristics may be updated (e.g., optimized) and fed back to subsequent iterations of the pruning process to improve the security of the candidate ML models (e.g., to reduce the likelihood that an attack corresponding to the attack models 212 is successful against the candidate ML models and/or to reduce a severity of the attack). The attack models 212 may correspond to one or more analyzed cybersecurity attacks or threats, particularly attacks that target ML and AI services. For example, the attack models 212 may be based on attacks that target ML model privacy, data privacy, other aspects of ML models, or a combination thereof, such as model extraction attacks, membership inference attacks, model inversion attacks, or the like. Updating the heuristics based on the tests and performing subsequent iterations using the updated heuristics may prevent or compensate for pruning away critical identifying information as compared to other pruning techniques, or may prune away information that has a high likelihood to be exploited in an attack. For example, adversarial and adaptive attacks may exploit the complexity of ML models for malicious behaviors, and the security-aware pruning performed by the model compression container 206 may remove excess complexity, thereby smoothing decision boundaries and increasing the difficulty of such attacks. As another example, a data poising attack may alter the distribution of data (e.g., training data, testing data, input data, etc.) to create malicious behavior for specific inputs, and the security-aware pruning may remove information from the candidate ML models that is necessary to trigger the malicious behavior. As another example, the attack models 212 may include a membership inference attack model, and as a result of the testing, feedback from the attack model may be utilized to determine how to prune the candidate ML network, by differentially looking at the uniquely identifying parts of the candidate ML network and updating the pruning heuristics to eliminate the uniquely identifying nodes.

Once the stopping criteria are satisfied, output is generated that includes a compressed ML model 220 and, optionally, a model report 222. The compressed ML model 220 may be associated with a smaller memory footprint and/or less complexity than the pre-trained ML model 202, while still satisfying one or more security criteria (e.g., having improved security compared to conventional compressed ML models that are security agnostic). In some implementations, the compressed ML model 220 may include or correspond to the compressed ML model 156 of FIG. 1. The model report 222 may be generated and maintained during performance of the iterative pruning process, including being updated based on operations and results of one or more iterations. In some implementations, the model report 222 may include or correspond to the model statistics report 180 of FIG. 1. The model report 222 may include statistics 224 and/or security analytics 226. The statistics 224 may include one or more parameters of the compressed ML model 220, candidate ML models created during the iterative pruning process, and/or the pre-trained ML model 202, and/or one or more performance metrics (e.g., model size, compression ratio, accuracy percentage, or the like) for the compressed ML model 220, the candidate ML models, and/or the pre-trained ML model 202. The security analytics 226 may include one or more risk assessment metrics, model success rates, model prevention times, other security information or metrics, or the like, for the compressed ML model 220, the candidate ML models, and/or the pre-trained ML model 202.

Referring to FIG. 3, an example of a client-based security-aware machine learning model training system according to one or more aspects is shown as a system 300. The system 300 may correspond to a client-side system that implements the iterative ML model compression process described above with reference to the model compression container 206 of FIG. 2 and/or the executable file package 110 of FIG. 1. The container may be configured to provide the environment and tools to execute the security-aware ML model compression process at one or more client devices, without requiring extensive technical knowledge by client personnel or particular software or environments at the client device(s). In the example shown in FIG. 3, the system 300 is divided between client inputs, a model compression container (e.g., an executable file package) hosted at the client, and output. As such, the components and operations described with reference to the system 300 may be performed by one or more client devices, such as a server or other computing device (e.g., the server 102 of FIG. 1, as a non-limiting example), either by a single device or distributed across multiple devices.

The client inputs of the system 300 include a pre-trained ML model 302, a model-specific dataset 303, and a configuration file 304. The pre-trained ML model 302 may be trained and/or maintained by the client and is not desired to be shared due to privacy or security concerns, similar to the pre-trained ML model represented by the ML model parameters 172 of FIG. 1 or the pre-trained ML model 202 of FIG. 2. The model-specific dataset 303 includes client data related to the pre-trained ML model 302, such as training data, testing data, validation data, and/or input data, that is maintained by the client and not desired to be shared due to privacy or security concerns, similar to the model-specific dataset 174 of FIG. 1. The configuration file 304 includes one or more parameters associated with the iterative model compression process (e.g., the iterative pruning process) performed by the model compression container, similar to the configuration file 170 of FIG. 1 or the configuration file 204 of FIG. 2. In the example shown in FIG. 3, the configuration file 304 includes pruning heuristics 305, stopping criteria 306, attack parameters 307, and configuration settings 308. The pruning heuristics 305 include one or more pruning heuristics for use in controlling the iterative pruning process, the stopping criteria 306 include one or more stopping criteria (e.g., based on client needs and parameters, such as device specifications and pertinent threat models) for use in determining whether to stop the iterative pruning process, the attack parameters 307 include one or more attack parameters for configuring attack models to use in testing during the iterative pruning process, and the configuration settings 308 include other settings relevant to performing the iterative pruning process. Although shown as distinct components in FIG. 3, in some other implementations, the configuration file 304 may include, or indicate the locations of, the pre-trained ML model 302 and/or the model-specific dataset 303.

The client inputs are used as input to the model compression container (e.g., during execution of the model compression container) to perform the iterative pruning process. To enable the iterative pruning process, the model compression container includes one or more modules configured to support the various operations. In the example shown in FIG. 3, the model compression container includes a preprocessing module 310, a pruning module 320, an attack test suite 330, and an evaluation module 340. The preprocessing module 310 may be configured to perform one or more preprocessing operations on the client inputs, such as formatting, data augmentation, extrapolation, removal of redundant or null data, other preprocessing, and the like. Additionally or alternatively, the preprocessing module 310 may be configured to perform one or more baseline benchmarks on the pre-trained ML model 302. In some implementations, the preprocessing module 310 may parse the configuration file 304 (e.g., the configuration settings 308) to generate a parsed configuration 312, the preprocessing module 310 may perform one or more performance tests on the pre-trained ML model 302 (e.g., using at least a portion of the model-specific dataset 303) to determine baseline model metrics 314, and the preprocessing module 310 may perform one or more dataset augmentation operations on the model-specific dataset 303 to generate augmented data 316. The one or more augmentation operations may include inspecting and modifying the model-specific dataset 303 to change training inputs, to extrapolate additional inputs, or the like, and may be based on the selected attack models indicated by the attack parameters 307. Pre-processed ML models, pre-processed data, and the like, may be provided as output of the preprocessing module 310 to the pruning module 320. In some implementations, the baseline model metrics 314 may include one or more baseline risk assessment metrics determined in conjunction with the evaluation module 340 using the pre-trained ML model 302.

The pruning module 320 may be configured to prune an input ML model during each iteration of the iterative pruning process. For example, the pruning module 320 may prune (e.g., remove or discard one or more nodes/one or more weights of connections to the nodes) to generate a candidate model 322 that has a smaller size and/or less complexity than the input ML model. The pruning module 320 may be configured to maintain dynamic heuristics 324 that are originally based on the pruning heuristics 305 and are updated based on feedback from the evaluation module 340. The candidate model 322 may be provided to the evaluation module 340 for testing during each iteration of the iterative pruning process.

The attack test suite 330 may include one or more attack models that are based on cybersecurity threats and attacks, particularly cybersecurity attacks that target ML and AI models and services. For example, the attack test suite 330 may include a first attack model 332, a second attack model 334, and an Nth attack model 336. Although three attack models are shown in FIG. 3, in other implementations, N may be fewer than three or more than three. The attack test suite 330 may select one or more of the attack models 332-336, and/or one or more settings thereof, to be provided to the evaluation module 340 based on the attack parameters 307. For example, the attack parameters 307 may indicate selection of one or more types of attacks that are relevant to the user or one or more parameters applicable to the attacks, such as device specifications, network specifications, or the like.

The evaluation module 340 may be configured to test the candidate model 322 using one or more attack models provided by the attack test suite 330. For example, the evaluation module 340 may determine a threat assessment benchmark 342 that includes risk assessment metrics 344 corresponding to the candidate model 322 and baseline risk assessment metrics 346 corresponding to the input ML model for the current iteration. The evaluation module 340 may also determine (or generate) testing data 350 based on the threat assessment benchmark 342 and/or additional aspects of the testing or pruning process for the current iteration. In some implementations, the testing data 350 includes pruned model test results 352, model performance data 354, and heuristic feedback data 356. The pruned model test results 352 may include one or more performance measurements for the candidate model 322, such as accuracy percentage, model size, or the like, similar to the baseline model metrics 314 for the pre-trained ML model 302 or an input ML model for the current iteration. The model performance data 354 may be based on comparisons of the metrics for the candidate model 322 and baseline metrics that represents the performance of the candidate ML model 322 as compared to the input ML model for the current iteration. For example, the model performance data 354 may be based on a comparison of the risk assessment metrics 344 and the baseline risk assessment metrics 346, a comparison of the pruned model test results 352 and the baseline model metrics 314, or both. The heuristic feedback data 356 may include or indicate one or more heuristic updates based on the model performance data 354. The evaluation module 340 may provide the heuristic feedback data 356 to the pruning module 320 for updating the dynamic heuristics 324. The evaluation module 340 may also perform stop criteria comparison 360 to determine whether to perform another iteration of the iterative pruning process or to stop the iterative pruning process. For example, the stop criteria comparison 360 may compare the model performance data 354 to the stopping criteria 306 to determine if one or more (or all) of the stopping criteria 306 are satisfied. If the stop criteria comparison 360 is not satisfied, the candidate model 322 is provided to the pruning module 320 for use as an input ML model for a next iteration of the iterative pruning process. Alternatively, if the stop criteria comparison 360 is satisfied, the evaluation module 340 may output the candidate model 322 as the compressed ML model 370.

The output of the model compression container includes the compressed ML model 370 and, optionally, a model report 372. The compressed ML model 370 is an ML model with a smaller size and/or less complexity than the pre-trained ML model 302 that is more robust to the cyberattacks and threats corresponding to the attack parameters 307 than conventional compressed ML models. The model report 372 includes information recorded during the iterative pruning process, such as statistics 374 and security analytics 376, similar to the model report 222 of FIG. 2.

During operation of the system 300, the client may provide several inputs, including the pre-trained ML model 302, the model-specific dataset 303, and the configuration file 304. The preprocessing module 310 may parse the configuration settings 308 to generate the parsed configuration 312, generate (e.g., gather) a baseline (e.g., the baseline model metrics 314) for the pre-trained ML model 302, and augment the model-specific dataset 303 if needed (e.g., depending on the attacks to be conducted) to generate the augmented data 316. The pruning module 320 may perform a round of pruning, using a pruning heuristic (e.g., the pruning heuristics 305 during a first iteration or the dynamic heuristics 324 during subsequent iterations) to determine how to prune the input ML model for the round (e.g., iteration). As described above, the dynamic heuristics 324 may be adjusted (e.g., improved or optimized) over time based on the heuristic feedback data 356 determined during testing. This pruning creates the candidate model 322, which is then evaluated by the evaluation module 340 against one or more selected attacks of the attack models 332-336 provided by the attack test suite 330. Information (e.g., the risk assessment metrics 344, the baseline risk assessment metrics 346, the pruned model test results 352, and/or the model performance data 354) may be gathered to evaluate model performance of the candidate model 322 and to determine the heuristic feedback data 356 used to update the dynamic heuristics 324. Some or all of the information may also used to determine whether to perform another iteration of pruning and testing, or to stop the pruning process, based on results of the stop criteria comparison 360. After possibly multiple rounds (e.g., iterations) of pruning and testing, output is generated that may include the compressed ML model 370, the model report 372, or both.

Referring to FIG. 4, an example of a cloud-based security-aware machine learning model training system according to one or more aspects is shown as a system 400. The system 400 may correspond to a cloud-based system that implements the iterative ML model compression process described above with reference to the model compression container 206 of FIG. 2 and/or the executable file package 110 of FIG. 1. The container may be configured to provide the environment and tools to execute the security-aware ML model compression process at one or more devices in the cloud based on information received from a client, without requiring extensive technical knowledge by cloud service provider personnel or particular software or environments at the cloud device(s). In the example shown in FIG. 4, the system 400 is divided between client inputs, a model compression container (e.g., an executable file package) hosted at by a cloud service provider (CSP), and output. As such, the components and operations described with reference to the system 400 may be performed by CSP devices, such as a server or other computing device, either by a single device or distributed across multiple devices.

The client inputs may include a pre-trained ML model 402, a model-specific dataset 403, and a configuration file 404 that includes pruning heuristics 405, stopping criteria 406, attack parameters 407, and configuration settings 408. The pre-trained ML model 402 and the model-specific dataset 403 are optional, and in some implementations are not provided, as further described below. The model compression container includes a preprocessing module 410, a pruning module 420, an attack test suite 430, and an evaluation module 440. The preprocessing module 410 may include a parsed configuration 412, baseline model metrics 414, and an augmented dataset 416. The pruning module 420 may include a candidate model 422 and dynamic heuristics 424. The attack test suite 430 may include a first attack model 432, a second attack model 434, and an Nth attack model 436. The evaluation module 440 may include a threat assessment benchmark 442, testing data 450, and a stop criteria comparison 460. The threat assessment benchmark 442 may include risk assessment metrics 444 and baseline risk assessment metrics 446. The testing data 450 may include pruned model test results 452, model performance data 454, and heuristic feedback data 456. The output may include a compressed ML model 470 and/or a model report 472 that includes statistics 474 and security analytics 476. Components of the system 400 may be configured and perform the operations as described above with reference to corresponding components of the system 300 of FIG. 3.

Unlike the client-side system (e.g., the system 300) described with reference to FIG. 3, the system 400 receives and executes the model compression container at a cloud server (or other device(s) in the cloud). Thus, the client may either provide their own pre-trained ML model and/or client-specific data or select from one or more ML models offered by the CSP. For example, if privacy concerns are not paramount, the client may provide the pre-trained ML model 402 and the model-specific dataset 403. Alternatively, if the client does not have their own pre-trained ML model, or prefers to keep their models private, the client may instead select to use an ML model offered by the CSP. For example, instead of providing the pre-trained ML model 402, the configuration file 404 may indicate client selection of a particular ML model supported by the CSP (e.g., from a plurality of ML models of a repository). In this example, the preprocessing module 410 may parse the configuration file 404 and implement a selected model 413 (e.g., an ML model selected by the client) for use during the pruning and testing. In some such implementations, the client may also select one of multiple supported datasets (or other publicly available datasets) for use as training data, testing data, validation data, and the like. Alternatively, the client may provide the model-specific dataset 403. The client receives the output shown in FIG. 4 and may run multiple instances of the process for different configuration files using cloud resources, which may require significant processing and memory resources on the client-side to implement. In this manner, the system 400 of FIG. 4 enables a CSP to use the model compression container to perform security-aware iterative pruning on supported ML models to leverage their existing ML models for use at edge computing devices for clients, or to provide security aware compression services for clients that provide their own pre-trained ML models.

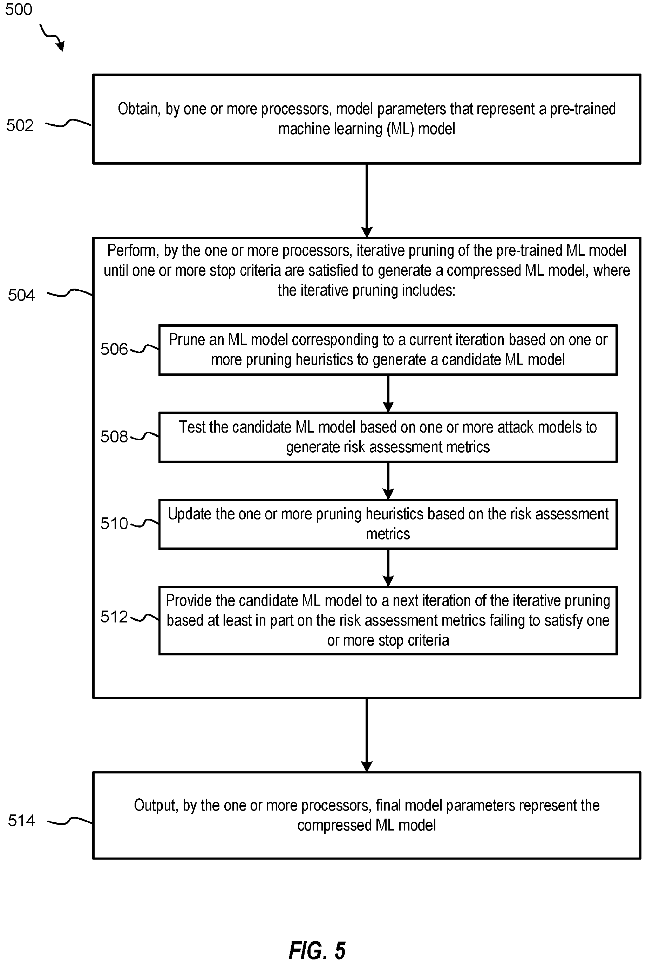

Referring to FIG. 5, a flow diagram of an example of a method for security-aware compression of ML models according to one or more aspects is shown as a method 500. In some implementations, the operations of the method 500 may be stored as instructions that, when executed by one or more processors (e.g., the one or more processors of a computing device or a server), cause the one or more processors to perform the operations of the method 500. In some implementations, the method 500 may be performed by a computing device, such as the server 102 of FIG. 1 (e.g., a computing device configured for security-aware machine learning model compression), a device executing the model compression container 206 of FIG. 2, the model compression container of the system 300 of FIG. 3, or the model compression container of the system 400 of FIG. 4, or a combination thereof.

The method 500 includes obtaining model parameters that represent a pre-trained ML model, at 502. For example, the model parameters that represent the pre-trained ML model may include or correspond to the ML model parameters 172 of FIG. 1. The method 500 includes performing iterative pruning of the pre-trained ML model until one or more stop criteria are satisfied to generate a compressed ML model, at 504. For example, the one or more stop criteria may include or correspond to the stop criteria 178 of FIG. 1.

The iterative pruning includes pruning an ML model corresponding to a current iteration based on one or more pruning heuristics to generate a candidate ML model, at 506. For example, the one or more pruning heuristics may include or correspond to the pruning heuristics 176 of FIG. 1. The iterative pruning includes testing the candidate ML model based on one or more attack models to generate risk assessment metrics, at 508. For example, the one or more attack models may include or correspond to the attack models 118 of FIG. 1, and the risk assessment metrics may include or correspond to the risk assessment metrics 120 of FIG. 1.

The iterative pruning includes updating the one or more pruning heuristics based on the risk assessment metrics, at 510. For example, updating the one or more pruning heuristics may generate updated heuristics that may include or correspond to the updated heuristics 124 of FIG. 1. The iterative pruning includes providing the candidate ML model to a next iteration of the iterative pruning based at least in part on the risk assessment metrics failing to satisfy one or more stop criteria, at 512. For example, the one or more stop criteria may include or correspond to may include or correspond to the stop criteria 178 of FIG. 1. The method 500 includes outputting final model parameters that represent the compressed ML model, at 514. For example, the final model parameters may include or correspond to the final ML model parameters 130 of FIG. 1.

In some implementations, the method 500 also includes receiving a configuration file from a client. The configuration file indicates the one or more pruning heuristics, the one or more stop criteria, or both. For example, the configuration file may include or correspond to the configuration file 170 of FIG. 1. In some such implementations, the configuration file further indicates one or more attack parameters, and the one or more attack models are based on the one or more attack parameters. For example, the attack models 118 of FIG. 1 may be based on attack parameters included in the configuration file 170. Additionally or alternatively, the configuration file may further indicate a location of the model parameters, a location of a model-specific dataset, or both. For example, the model parameters may include or correspond to the ML model parameters 172 of FIG. 1, and the model-specific dataset may include or correspond to the model-specific dataset 174 of FIG. 1.

In some implementations, the method 500 also includes performing, prior to performing the iterative pruning, one or more preprocessing operations on the pre-trained ML model, a model-specific dataset, or both. For example, the one or more preprocessing operations may be performed based on execution of the preprocessing module 112 of FIG. 1. In some such implementations, the one or more preprocessing operations include testing the pre-trained ML model based on the one or more attack models to generate baseline risk assessment metrics, testing the pre-trained ML model using a testing dataset to generate baseline metrics, or both. For example, the baseline risk assessment metrics may include or correspond to the baseline risk assessment metrics 126 of FIG. 1, and the baseline metrics may include or correspond to the baseline metrics 128 of FIG. 1. In some such implementations, the iterative training further includes testing the candidate ML model using the testing dataset to generate candidate model metrics, comparing the risk assessment metrics to the baseline risk assessment metrics, the candidate model metrics to the baseline metrics, or both, to generate model performance results, and determining whether to provide the candidate ML model to the next iteration of the iterative pruning based on a comparison of the model performance results to the one or more stop criteria. For example, execution of the evaluation module 116 of FIG. 1 may cause a determination of whether to perform a next iteration of the iterative training based on a comparison of the stop criteria 178 and results of a comparison the baseline risk assessment metrics 126 to the risk assessment metrics 120, a comparison of the baseline metrics 128 to the candidate metrics 122, or both. Additionally or alternatively, the one or more preprocessing operations may include augmenting the model-specific dataset based on the one or more attack models. For example, execution of the preprocessing module 112 of FIG. 1 may cause augmentation of the model-specific dataset 174.

In some implementations, performing the iterative pruning further includes updating a model statistics report based on the risk assessment metrics corresponding to the candidate ML model, one or more performance metrics corresponding to the candidate ML model, or both. For example, the model statistics report may include or correspond to the model statistics report 180 of FIG. 1. In some such implementations, the method 500 may also include outputting the model statistics report. For example, the model statistics report 180 of FIG. 1 may be output to the client device 150.

In some implementations, the one or more attack models include a model extraction attack model, a membership interference attack model, a model inversion attack model, a data poisoning attack model, an adversarial attack model, or a combination thereof. Additionally or alternatively, performance of the iterative pruning may be based on execution of an executable file package that includes configurations, an operating system, one or more ML libraries, one or more attack model libraries, or a combination thereof. For example, the executable file package (e.g., a container) may include or correspond to the executable file package 110 of FIG. 1. Additionally or alternatively, the one or more pruning heuristics may include average percentage of zero activations (APoZ) to measure an average percentage of zero activations of a neuron after the start of rectified linear unit (ReLU) mapping. In this context, the ML model may be a neural network and each layer (e.g., each fully connected or convolutional layer) of the neural network may be followed by a ReLU layer for nonlinear mapping. Accordingly, pruning heuristics such as APoZ may determine which neurons in the neural network have an output that is mostly zero. These neurons can then be pruned (e.g., removed) without significantly harming the overall accuracy of the neural network. Additionally or alternatively, the one or more stop criteria may include one or more success rates corresponding to the one or more attack models, a compression ratio, a pruning duration threshold, an accuracy threshold, or a combination thereof.

In some implementations, the pre-trained ML model includes a neural network, and pruning includes discarding one or more weights associated with the neural network. The one or more weights correspond to connections to one or more pruned nodes. For example, the ML model parameters 172 of FIG. 1 may be parameters of a pre-trained neural network, and the pruning performed by executing the pruning module 114 may include discarding, erasing, or otherwise removing one or more weights associated with pruned nodes in the neural network. In some such implementations, the weights (and/or other pruned node information) may be stored for use in recreating the state of the neural network prior to one or more pruning operations.

In some implementations, obtaining the model parameters includes receiving, from a client device, the model parameters. For example, the ML model parameters 172 of FIG. 1 may be received from the client device 150. In some other implementations, obtaining the model parameters includes accessing the model parameters from a model repository based on a model selection input. For example, the server 102 of FIG. 1 may store or have access to a model repository, and the ML model parameters 172 may be retrieved from the model repository based on user selection indicated by input from the client device 150. Additionally or alternatively, outputting the final model parameters may include providing the final model parameters to an edge device configured to implement the compressed ML model. For example, the edge device may include or correspond to the edge device 152 of FIG. 1, and the compressed ML model may include or correspond to the compressed ML model 154 of FIG. 1.

As described above, the method 500 supports compression of ML models in a security-aware manner that accounts for cyberattacks or threats to ML and AI services, as compared to conventional ML model compression systems and techniques. For example, in addition to pruning a pre-trained ML model based on pruning heuristics (in order to achieve target size, accuracy, or other performance metrics), the method 500 includes testing pruned ML models (i.e., candidate ML models) using attack model(s) which represent ML and AI-specific cyberattacks and/or edge computing-specific cyberattacks. Based on results of the testing, the method 500 updates the pruning heuristics and controls the iterative pruning process such that an output ML model not only satisfies one or more performance metrics, but is also robust against (e.g., is secure or prevents/has a decreased likelihood of being exploited by) known cybersecurity threats and attacks, particularly ones designed to exploit ML and AI services. As such, the method 500 provides ML models suitable for use at edge computing devices, due to the ML model's compressed size and improved security with respect to cybersecurity attacks and threats, thereby solving a unique problem in the realm of computer technology and ML and AI systems - security threats of ML and AI services at edge computing devices. In some implementations, the operations described with reference to the method 500 may be implemented using an executable file package (e.g., a container, such as a Docker container as a non-limiting example), which enables performance of the operations in a scalable, platform-agnostic manner and without requiring complex setup or management by information technology personnel on the client-side. Alternatively, the executable file package may be provided to a cloud service provider, enabling cloud-based ML and AI service providers to leverage their existing ML and AI models to be used in security-aware compression for providing ML or AI services at edge computing devices.

It is noted that other types of devices and functionality may be provided according to aspects of the present disclosure and discussion of specific devices and functionality herein have been provided for purposes of illustration, rather than by way of limitation. It is noted that the operations of the method 500 of FIG. 5 may be performed in any order, or that operations of one method may be performed during performance of another method. It is also noted that the method 500 of FIG. 5 may also include other functionality or operations consistent with the description of the operations of the system 100 of FIG. 1, the system 200 of FIG. 2, the system 300 of FIG. 3, the system 400 of FIG. 4, or a combination thereof.

Those of skill in the art would understand that information and signals may be represented using any of a variety of different technologies and techniques. For example, data, instructions, commands, information, signals, bits, symbols, and chips that may be referenced throughout the above description may be represented by voltages, currents, electromagnetic waves, magnetic fields or particles, optical fields or particles, or any combination thereof.

Components, the functional blocks, and the modules described herein with respect to FIGs. 1-5) include processors, electronics devices, hardware devices, electronics components, logical circuits, memories, software codes, firmware codes, among other examples, or any combination thereof. In addition, features discussed herein may be implemented via specialized processor circuitry, via executable instructions, or combinations thereof.

Those of skill would further appreciate that the various illustrative logical blocks, modules, circuits, and algorithm steps described in connection with the disclosure herein may be implemented as electronic hardware, computer software, or combinations of both. To clearly illustrate this interchangeability of hardware and software, various illustrative components, blocks, modules, circuits, and steps have been described above generally in terms of their functionality. Whether such functionality is implemented as hardware or software depends upon the particular application and design constraints imposed on the overall system. Skilled artisans may implement the described functionality in varying ways for each particular application, but such implementation decisions should not be interpreted as causing a departure from the scope of the present disclosure. Skilled artisans will also readily recognize that the order or combination of components, methods, or interactions that are described herein are merely examples and that the components, methods, or interactions of the various aspects of the present disclosure may be combined or performed in ways other than those illustrated and described herein.

The various illustrative logics, logical blocks, modules, circuits, and algorithm processes described in connection with the implementations disclosed herein may be implemented as electronic hardware, computer software, or combinations of both. The interchangeability of hardware and software has been described generally, in terms of functionality, and illustrated in the various illustrative components, blocks, modules, circuits and processes described above. Whether such functionality is implemented in hardware or software depends upon the particular application and design constraints imposed on the overall system.

The hardware and data processing apparatus used to implement the various illustrative logics, logical blocks, modules, and circuits described in connection with the aspects disclosed herein may be implemented or performed with a general purpose single- or multi-chip processor, a digital signal processor (DSP), an application specific integrated circuit (ASIC), a field programmable gate array (FPGA) or other programmable logic device, discrete gate or transistor logic, discrete hardware components, or any combination thereof designed to perform the functions described herein. A general purpose processor may be a microprocessor, or any conventional processor, controller, microcontroller, or state machine. In some implementations, a processor may also be implemented as a combination of computing devices, such as a combination of a DSP and a microprocessor, a plurality of microprocessors, one or more microprocessors in conjunction with a DSP core, or any other such configuration. In some implementations, particular processes and methods may be performed by circuitry that is specific to a given function.

In one or more aspects, the functions described may be implemented in hardware, digital electronic circuitry, computer software, firmware, including the structures disclosed in this specification and their structural equivalents thereof, or any combination thereof. Implementations of the subject matter described in this specification also may be implemented as one or more computer programs, that is one or more modules of computer program instructions, encoded on a computer storage media for execution by, or to control the operation of, data processing apparatus.

If implemented in software, the functions may be stored on or transmitted over as one or more instructions or code on a computer-readable medium. The processes of a method or algorithm disclosed herein may be implemented in a processor-executable software module which may reside on a computer-readable medium. Computer-readable media includes both computer storage media and communication media including any medium that may be enabled to transfer a computer program from one place to another. A storage media may be any available media that may be accessed by a computer. By way of example, and not limitation, such computer-readable media can include random-access memory (RAM), read-only memory (ROM), electrically erasable programmable read-only memory (EEPROM), CD-ROM or other optical disk storage, magnetic disk storage or other magnetic storage devices, or any other medium that may be used to store desired program code in the form of instructions or data structures and that may be accessed by a computer. Also, any connection may be properly termed a computer-readable medium. Disk and disc, as used herein, includes compact disc (CD), laser disc, optical disc, digital versatile disc (DVD), floppy disk, hard disk, solid state disk, and Blu-ray disc where disks usually reproduce data magnetically, while discs reproduce data optically with lasers. Combinations of the above should also be included within the scope of computer-readable media. Additionally, the operations of a method or algorithm may reside as one or any combination or set of codes and instructions on a machine readable medium and computer-readable medium, which may be incorporated into a computer program product.

Various modifications to the implementations described in this disclosure may be readily apparent to those skilled in the art, and the generic principles defined herein may be applied to some other implementations without departing from the spirit or scope of this disclosure. Thus, the claims are not intended to be limited to the implementations shown herein, but are to be accorded the widest scope consistent with this disclosure, the principles and the novel features disclosed herein.

Additionally, a person having ordinary skill in the art will readily appreciate, the terms "upper" and "lower" are sometimes used for ease of describing the figures, and indicate relative positions corresponding to the orientation of the figure on a properly oriented page, and may not reflect the proper orientation of any device as implemented.

Certain features that are described in this specification in the context of separate implementations also may be implemented in combination in a single implementation. Conversely, various features that are described in the context of a single implementation also may be implemented in multiple implementations separately or in any suitable subcombination. Moreover, although features may be described above as acting in certain combinations and even initially claimed as such, one or more features from a claimed combination may in some cases be excised from the combination, and the claimed combination may be directed to a subcombination or variation of a subcombination.

Similarly, while operations are depicted in the drawings in a particular order, this should not be understood as requiring that such operations be performed in the particular order shown or in sequential order, or that all illustrated operations be performed, to achieve desirable results. Further, the drawings may schematically depict one more example processes in the form of a flow diagram. However, other operations that are not depicted may be incorporated in the example processes that are schematically illustrated. For example, one or more additional operations may be performed before, after, simultaneously, or between any of the illustrated operations. In certain circumstances, multitasking and parallel processing may be advantageous. Moreover, the separation of various system components in the implementations described above should not be understood as requiring such separation in all implementations, and it should be understood that the described program components and systems may generally be integrated together in a single software product or packaged into multiple software products. Additionally, some other implementations are within the scope of the following claims. In some cases, the actions recited in the claims may be performed in a different order and still achieve desirable results.

As used herein, including in the claims, various terminology is for the purpose of describing particular implementations only and is not intended to be limiting of implementations. For example, as used herein, an ordinal term (e.g., "first," "second," "third," etc.) used to modify an element, such as a structure, a component, an operation, etc., does not by itself indicate any priority or order of the element with respect to another element, but rather merely distinguishes the element from another element having a same name (but for use of the ordinal term). The term "coupled" is defined as connected, although not necessarily directly, and not necessarily mechanically; two items that are "coupled" may be unitary with each other. the term "or," when used in a list of two or more items, means that any one of the listed items may be employed by itself, or any combination of two or more of the listed items may be employed. For example, if a composition is described as containing components A, B, or C, the composition may contain A alone; B alone; C alone; A and B in combination; A and C in combination; B and C in combination; or A, B, and C in combination. Also, as used herein, including in the claims, "or" as used in a list of items prefaced by "at least one of" indicates a disjunctive list such that, for example, a list of "at least one of A, B, or C" means A or B or C or AB or AC or BC or ABC (that is A and B and C) or any of these in any combination thereof. The term "substantially" is defined as largely but not necessarily wholly what is specified - and includes what is specified; e.g., substantially 90 degrees includes 90 degrees and substantially parallel includes parallel - as understood by a person of ordinary skill in the art. In any disclosed aspect, the term "substantially" may be substituted with "within [a percentage] of' what is specified, where the percentage includes 0.1, 1, 5, and 10 percent; and the term "approximately" may be substituted with "within 10 percent of" what is specified. The phrase "and/or" means and or.

Although the aspects of the present disclosure and their advantages have been described in detail, it should be understood that various changes, substitutions and alterations can be made herein without departing from the spirit of the disclosure as defined by the appended claims. Moreover, the scope of the present application is not intended to be limited to the particular implementations of the process, machine, manufacture, composition of matter, means, methods and processes described in the specification. As one of ordinary skill in the art will readily appreciate from the present disclosure, processes, machines, manufacture, compositions of matter, means, methods, or operations, presently existing or later to be developed that perform substantially the same function or achieve substantially the same result as the corresponding aspects described herein may be utilized according to the present disclosure. Accordingly, the appended claims are intended to include within their scope such processes, machines, manufacture, compositions of matter, means, methods, or operations.

## Claims

1. A method for security-aware compression of machine learning models, the method comprising:
obtaining, by one or more processors, model parameters that represent a pre-trained machine learning (ML) model;
performing, by the one or more processors, iterative pruning of the pre-trained ML model until one or more stop criteria are satisfied to generate a compressed ML model, wherein the iterative pruning comprises:
pruning an ML model corresponding to a current iteration based on one or more pruning heuristics to generate a candidate ML model;
testing the candidate ML model based on one or more attack models to generate risk assessment metrics;
updating the one or more pruning heuristics based on the risk assessment metrics; and
providing the candidate ML model to a next iteration of the iterative pruning based at least in part on the risk assessment metrics failing to satisfy the one or more stop criteria; and
outputting, by the one or more processors, final model parameters that represent the compressed ML model.

2. The method of claim 1, wherein the one or more attack models comprise a model extraction attack model, a membership interference attack model, a model inversion attack model, a data poisoning attack model, an adversarial attack model, or a combination thereof.

3. The method of any of claims 1 or 2, further comprising:
receiving, by the one or more processors, a configuration file from a client, the configuration file indicating the one or more pruning heuristics, the one or more stop criteria, or both.

4. The method of claim 3, wherein the configuration file further indicates one or more attack parameters, and wherein the one or more attack models are based on the one or more attack parameters.

5. The method of any of claims 1-4, further comprising:
performing, by the one or more processors and prior to performing the iterative pruning, one or more preprocessing operations on the pre-trained ML model, a model-specific dataset, or both.

6. The method of claim 5, wherein the one or more preprocessing operations include testing the pre-trained ML model based on the one or more attack models to generate baseline risk assessment metrics, testing the pre-trained ML model using a testing dataset to generate baseline metrics, or both.

7. The method of claim 6, wherein the iterative training further comprises:
testing the candidate ML model using the testing dataset to generate candidate model metrics;
comparing the risk assessment metrics to the baseline risk assessment metrics, the candidate model metrics to the baseline metrics, or both, to generate model performance results; and
determining whether to provide the candidate ML model to the next iteration of the iterative pruning based on a comparison of the model performance results to the one or more stop criteria.

8. The method of any of claims 5-7, wherein the one or more preprocessing operations include augmenting the model-specific dataset based on the one or more attack models.

9. The method of any of claims 1-8, wherein performing the iterative pruning further comprises:
updating a model statistics report based on the risk assessment metrics corresponding to the candidate ML model, one or more performance metrics corresponding to the candidate ML model, or both; and optionally,
outputting, by the one or more processors, the model statistics report.

10. A computer program product comprising computer-readable instructions which, when loaded and executed on a suitable system cause performance of the steps of any of claims 1-9.

11. A system for security-aware compression of machine learning models, the system comprising:
a memory; and
one or more processors communicatively coupled to the memory, the one or more processors configured to:
obtain model parameters that represent a pre-trained machine learning (ML) model;
perform iterative pruning of the pre-trained ML model until one or more stop criteria are satisfied to generate a compressed ML model, wherein the iterative pruning causes the one or more processors to:
prune an ML model corresponding to a current iteration based on one or more pruning heuristics to generate a candidate ML model;
test the candidate ML model based on one or more attack models to generate risk assessment metrics;
update the one or more pruning heuristics based on the risk assessment metrics; and
provide the candidate ML model to a next iteration of the iterative pruning based at least in part on the risk assessment metrics failing to satisfy the one or more stop criteria; and
output final model parameters that represent the compressed ML model.

12. The system of claim 11, wherein performance of the iterative pruning is based on execution of an executable file package that includes configurations, an operating system, one or more ML libraries, one or more attack model libraries, or a combination thereof.

13. The system of any of claims 11 or 12, wherein the one or more pruning heuristics include average percentage of zero activations (APoZ).

14. The system of any of claims 11-13, wherein the one or more stop criteria include one or more success rates corresponding to the one or more attack models, a compression ratio, a pruning duration threshold, an accuracy threshold, or a combination thereof.

15. The system of any of claims 11-14, wherein:
the pre-trained ML model comprises a neural network; and
pruning includes discarding one or more weights associated with the neural network, the one or more weights corresponding to connections to one or more pruned nodes.
